Europäisches Patentamt

European Patent Office

Office européen des brevets

(19)

(11) Veröffentlichungsnummer: **0 011 220**
A1

(12) ## EUROPÄISCHE PATENTANMELDUNG

(21) Anmeldenummer: 79104338.3

(22) Anmeldetag: 06.11.79

(51) Int. Cl.³: **B 23 B 31/30**

(30) Priorität: **07.11.78 DE 2848172**

(43) Veröffentlichungstag der Anmeldung:
**28.05.80 Patentblatt 80/11**

(84) Benannte Vertragsstaaten:
**AT BE CH DE FR GB IT LU NL SE**

(71) Anmelder: **Heckmann, Günter**
**Am Schultenbrink 52**
**D-4322 Sprockhövel(DE)**

(72) Erfinder: **Heckmann, Günter**
**Am Schultenbrink 52**
**D-4322 Sprockhövel(DE)**

(74) Vertreter: **Sparing, Nikolaus, Dipl.-Ing.**
**Lindemannstrasse 31**
**D-4000 Düsseldorf(DE)**

(54) **Umlaufender Spannzylinder.**

(57) Voll- oder Hohlspannzylinder, bei dem das Vierwege-Steuerventil und die Rückschlagventilanordnung mit umlaufen und das Ventilglied des Vierwegeventils als axialverschiebliche Hülse (236) auf der Außenseite der Kolbenstange (216) angeordnet ist, wobei die Konstruktion extrem einfach wird und nur wenige Dichtungen vorzusehen sind.

EP 0 011 220 A1

./...

Fig. 3

Günter Heckmann, Am Schultenbrink 52, 4322 Sprockhövel

"Umlaufender Spannzylinder"
------------------------------------

Die Erfindung betrifft einen umlaufenden Spannzylinder für Werkzeugmaschinenfutter.

Druckmediumbetätigten Spannzylindern ist immer ein Steuerorgan zugeordnet, mittels dem der im Zylinder axialbewegliche Kolben aus der einen Endlage in die andere umgesteuert wird. Darüber hinaus sind regelmäßig Sicherheitseinrichtungen in Form von Rückschlagventilen vorgesehen, die bei Versagen der Druckmittelzufuhr einen plötzlichen Druckabfall im Zylinder verhindern.

Neben der weitverbreiteten Bauart, bei der die Steuerventilanordnung im nichtdrehbaren Teil des Spannzylinders angeordnet ist und das Druckmedium umschaltet, ist auch eine Bauart bekanntgeworden, bei der die Umsteuerung mittels Druckmediumimpulsen erfolgt, die einen Hilfsschieber beaufschlagen. Das dabei betätigte Hauptumsteuerventil ist am Spannzylinder selbst angeordnet und läuft mit diesem um. Über das sogenannte Anschlußgehäuse, das nicht umläuft, aber mit dem Spannzylinder verbunden ist, wird über eine Hauptleitung das Druckmedium zum Spannzylinder eingespeist, und über zwei Steueranschlüsse wird der Hilfsschieber mit Druckimpulsen versorgt. Zwischen der Hauptleitung und dem Hauptumsteuerventil ist ein einziges Rückschlagventil angeordnet. Der Vorteil der einzigen Hauptzuleitung macht eine solche Bauart vorzugsweise für Druckluft geeignet, da die Druckentlastung über eine Bohrung in die Atmosphäre erfolgt. Ein solcher Spannzylinder ist in der DE-PS 1 949 457 beschrieben und dargestellt.

Der bekannte Spannzylinder weist einen radialbeweglichen Hilfsschieber auf, der in einem an den Zylinderkörper angeflanschten Gehäuse untergebracht ist. Die Druckmediumimpulse werden ebenfalls über das Anschlußgehäuse zugeführt, was die Bauart kompliziert.

Aufgabe der Erfindung ist es, einen Spannzylinder mit den im Oberbegriff des Patentanspruchs 1 genannten Merkmalen, die auch bei dem bekannten Spannzylinder vorgesehen sind, zu schaffen. dessen Aufbau extrem einfach ist und die Umsteuerung auch mit anderen Mitteln als Druckimpulsen gestattet, diese Art der Umsteuerung aber gleichwohl zuläßt.

Die gemäß der Erfindung vorgesehene Lösung dieser Aufgabe ergibt sich aus den kennzeichnenden Merkmalen des Patentanspruchs

Durch die Anordnung des Hauptumsteuerventils, das wie üblich als Vierwegeventil ausgebildet ist, auf der Kolbenstange ist das Ventilglied von außen zugänglich und kann mechanisch, mittel eines Hilfsschiebers, elektromagnetisch oder in anderer Weise be tätigt werden. Das Ventilglied selbst ist dabei ein einfaches Drehteil, und die Zahl der notwendigen Arbeitsgänge an der Kolbe stange ist auf ein Minimum reduziert. Das Rückschlagventil läßt sich in einfachster Weise als O-Ring in eine Außennut der Kolben stange eingelegt ausbilden, und damit ist es an einer Stelle angeordnet, wo selbst dann noch Sicherheit gegen Druckabfall gegeben ist, wenn der Zapfen der Kolbenstange, auf dem das Anschlu gehäuse sitzt, einmal abbrechen sollte. Da der Zapfen nur eine zentrale Bohrung aufweist, ist die Möglichkeit gegeben, den Durchmesser dieses Zapfens, auf dem das Anschlußgehäuse gleitet, minimal auszubilden mit entsprechend geringen Bahngeschwindigkeiten der aufeinander gleitenden Teile auch bei hohen Drehzahle

Es ist aber auch möglich, den erfindungsgemäßen Spannzylinde als Hohlspannzylinder auszubilden, wobei dann in Weiterbildung der Erfindung die als Ventilglied des Vierwegeventils dienende Hülse selbst mittels einer solchen Dichtanordnung gegen die Kolbenstange abgedichtet sein kann, daß jene zugleich als

Sicherheits-Rückschlagventil dient. Die Zuleitung des Druckmediums ist dann nur noch für die Umsteuerung notwendig, so daß auch nur im Stillstand der Spindel eine Druckfluid-Kommunikation zwischen dem Anschlußelement und der Hülse herbeigeführt wird. Mit anderen Worten: Die Rückschlagventile, die bei herkömmlichen Spannzylindern nur eine Sicherungsfunktion haben, erfüllen hier zuglich die Rolle von Betriebsventilen. Ein solcher Spannzylinder läßt sich in regelmäßigen Intervallen sicherheitstechnisch überprüfen, indem beispielsweise bei Schichtende ein Werkstück gespannt wird und dann die Druckmediumversorgung abgeschaltet wird. Ist das Werkstück beim nächsten Schichtbeginn noch immer gespannt, so sind die entsprechenden Ventile auch alle in Ordnung.

An dieser Stelle ist darauf hinzuweisen, daß aus der DE-AS 23 34 940 eine Spannzylinderanordnung bekannt ist, bei der ebenfalls eine axialbewegliche Hülse vorgesehen ist, die Druckmedium in die eine oder andere Zylinderkammer steuert. Diese bekannte Hülse läuft jedoch nicht mit um, sondern ist unmittelbar an die Druckmediumquelle angeschlossen und dient so zugleich als sogenanntes Anschlußgehäuse. Sicherheits-Rückschlagventile sind bei der bekannten Konstruktion nicht vorgesehen, und es ist auch nicht erkennbar, wie und wo sie vorgesehen werden könnten, insbesondere deshalb, weil dort die Hülse hydrostatisch gelagert sein soll und daher ständig Druckmedium unter dem Hülsenraum herausleckt.

Soweit in der nachfolgenden Beschreibung von Ausführungsbeispielen auf Druckluft bezug genommen wird, versteht es sich, daß in analoger Weise auch hydraulisch betätigbare Spannzylinder gebaut werden könnten, indem etwa das radil aus der Kolbenstange ins Freie tretende Hydraulikfluid aufgefangen und in einen Tank zurückgeführt wird.

Ausführungsbeispiele des Gegenstandes der Erfindung werden nachstehend unter Bezugnahme auf die beigefügten Zeichnungen näher erläutert:

- 4 -

0011220

Fig. 1 stellt einen erfindungsgemäß aufgebauten
Spannzylinder im Axialschnitt dar,

Fig. 2 zeigt schematisch die Umsteuereinrichtung
des Zylinders in einer von Fig. 1 abweichenden Anordnung, und

Fig. 3 stellt eine Ausführungsform des Gegenstandes
der Erfindung als Hohlspannzylinder im Axialschnitt dar, während

Fig. 4 eine alternative Ausführung der in Fig. 3 gezeigten Komponenten für die Druckmediumzufuhr
darstellt.

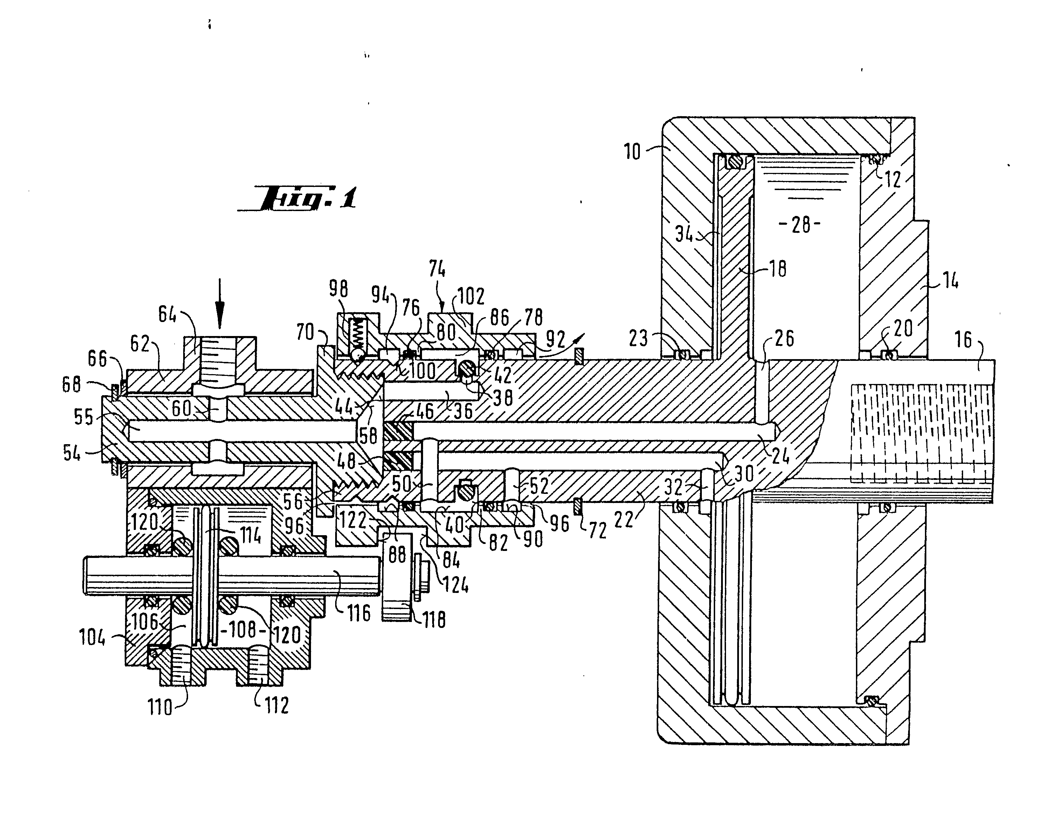

Zunächst wird der Aufbau des Spannzylinders selbst anhand der
Fig. 1 erläutert.

Der Zylinderkörper 10 ist in üblicher, hier nicht dargestellter
Weise an der Werkzeugmaschinenspindel, beispielsweise einer Drehmaschinenspindel, befestigt. Sein futterseitiges Ende, rechts in
der Zeichnung, ist durch einen bei 12 abgedichtet befestigten
Deckel 14 verschlossen, und die futterseitige Kolbenstange 16
des Kolbens 18 ist gleitbeweglich, jedoch bei 20 abgedichtet im
Deckel 14 geführt.

Die anschlußgehäuseseitige Kolbenstange 22 ist bei 23 gegen
den Zylinderkörper abgedichtet und wird axial von drei Bohrungen
durchsetzt, die vorzugsweise symmetrisch bezüglich der Kolbenstangenachse, also um je 120$^O$ zueinander versetzt, angeordnet
sind.

(In der Zeichnung sind jedoch alle drei Bohrungen in der
Schnittebene gezeichnet, um die Darstellung zu vereinfachen;
entsprechendes gilt für die Radialbohrungen, die in die Axialbohrungen münden).

Die erste Axialbohrung 24 ist über eine Radialbohrung 26 mit
dem futterseitigen Zylinderraum 28, rechts vom Kolben 18 in der
Zeichnung, verbunden. Die zweite Axialbohrung 30 ist in ähnlicher
Weise über die Radilabohrung 32 mit dem anschlußgehäuseseitigen
Zylinderraum 34 verbunden. Die dritte Axialbohrung 36 schließlich

mündet über eine Radialbohrung 38 in eine in die Kolbenstange 22 eingestochene Ringnut 40, in der ein als Sicherheitsventilglied dienender O-Ring 42 liegt; die Bohrung 38 mündet in eine engere und tiefere Umfangsnut am Grund der Nut 40. Die Umfangskante dieser tieferen Nut dient als Ventilsitz.

Alle drei Axialbohrungen 24, 30 und 36 sind von der dem Kolben abgewandten Stirnseite 44 der Kolbenstange 22 aus eingebracht, und diese Enden der Bohrungen 24 und 30 sind durch Stopfen 46 bzw. 48 abdichtend verschlossen, während die Bohrung 36 offen ist.

Hinter den Stopfen 46 bzw. 48 sind die Bohrungen 24 bzw. 30 über Radialbohrungen 50 bzw. 52 mit der Außenseite der Kolbenstange 22 verbunden; die beiden Radialbohrungen 50 und 52 sind in Axialrichtung zueinander versetzt, derart, daß die Bohrung 52 näher am Zylinderkörper 10 liegt als die Bohrung 50 und mittig zwischen beiden Bohrungen 50 und 52 befindet sich die Radialbohrung 38.

Ein Anschlußzapfen 54 ist auf das anschlußgehäuseseitige Ende der Kolbenstange 22 aufgesetzt und befestigt, beispielsweise in einen Axialbund 56 eingeschraubt. Der Zapfen 54 ist von einer zentralen Axialbohrung 55, von dem kolbenstangenseitigen Ende her eingebracht und als Sackloch ausgebildet, durchsetzt, die eine Senkung 58 großen Durchmessers an dieser Stelle aufweist. Von außen eingebrachte Radialbohrungen 60 münden in die Axialbohrung 55. Das freie Ende des Zapfens ist im Durchmesser abgesetzt, und auf ihm sitzt in Umfangsrichtung gleitbeweglich das Anschlußgehäuse 62, dessen Druckanschlußstutzen 64 über eine (nicht dargestellte) flexible Leitung in üblicher Weise mit einer Druckluftquelle verbunden ist. Im Betrieb wird diese Leitung ständig mit Druck beaufschlagt, also nicht zu- oder abgeschaltet. EineAnschlagscheibe 66 und Sprengring 68 umfassende Anordnung hält das Anschlußgehäuse 62 auf dem Zapfen.

Zwischen einem radial vorstehenden Bund 70 des Zapfens 54 und einem auf die Kolbenstange 22 aufgesetzten und als Anschlag dienenden Sprengring 72 ist eine Hülse 74 in Axialrichtung

0011220

gleitbeweglich. Auch eine Drehung relativ zur Kolbenstange 22 ist möglich, wird aber durch abdichtende O-Ringe 76 und 78 gebremst, die in Innennuten der Hülse 74 sitzen und auf der Kolbenstange anliegen.

Die O-Ringe 76 und 78 sind jeweils in einernach innen einspringenden Umfangsrippe 80 bzw. 82 untergebracht, und zwischen den Rippen befindet sich eine Umfangsausnehmung 84, die in Axialrichtung so bemessen ist, daß in der einen Endstellung (die in der Zeichnung dargestellte) die beiden Radialbohrungen 50 und 38, in der anderen die beiden Radialbohrung 38 und 52 in die von der Kolbenstange 22 einerseits, der Ausnehmung 84 andererseits umschlossene Kammer 86 münden. Auf der der Ausnehmung 84 abgewandten Seite der Rippen 82 bzw. 80 befinden sich jeweils weitere Ausdrehungen 88 bzw. 90, deren axiale Position so festgelegt ist, daß in der einen Endstellung der Hülse (der gezeichneten) die Bohrung 52 in der von der Ausdrehung 90 umschlossene Auslaßkammer 92 mündet, in der anderen Endstellung die Bohrung 50 in die von der Ausdrehung 88 umschlossene Auslaßkammer 94 mündet. Die beiden Kammern 92 und 94 kommunizieren mit der umgebenden Atmosphäre über je einen der Geräuschminderung dienenden Drosselspalt 96. Ein Federkugelschnäpper 98 in der Hülse 74 wirkt mit Umfangsnuten 100 der Kolbenstange 22 mit Dreieckquerschnitt zusammen, um die Hülse in ihren beiden Endlagen zu positionieren.

Der insoweit beschriebene, außerordentlich einfach aus preisgünstig zu fertigenden Teilen aufgebaute Spannzylinder arbeitet wie folgt:

Die am Stutzen 64 zugeführte Druckluft gelangt über die Bohrungen 60 und 55 in den Hohlraum vor der Kolbenstange 22 und von dort über die Bohrungen 36 und 38 bis zum Rückschlagventil (O-Ring 42). Etwa bis zu dieser Stelle auftretende Leckverluste sind tolerierbar. Aus der Kammer 86, die in Strömungsrichtung stromabwärts hinter dem Rückschlagventil liegt, wird entweder die eine Zylinderkammer 28, wie da dargestellt, über Bohrungen 50-24-26 beaufschlagt oder, in der anderen Endstellung der Hülse 74, die andere Zylinderkammer 34 über die Bohrungen 52-30-32. Die Hülse 74 bildet mithin das Ventilglied eines Vierwegeventils, wobei die jeweils nicht mit Druck beaufschlagte Kammer 34 über die Bohrungen 32-30-52 sowie Kammer 90 und Drosselspalt 96 entlüftet wird (dargestellte Position), die andere Kammer 28 in der anderen Endstellung über 26-24-50-94-96.

Die Verschiebung der Hülse 74 in ihre Endlagen kann in unterschiedlichster Weise erfolgen, da die Hülse von außen zugänglich ist. Beispielsweise kann man einfach ein mechanisches Gestänge verwenden, das gabelartig über einen radial vorstehenden Bund 102 der Hülse 74 greift. Man kann aber auch in an sich bekannter Weise mit Druckmediumimpulsen arbeiten, die einem Hilfssteuerzylinder zugeführt werden. Eine derartige Ausführungsform ist in Fig. 1 dargestellt. Das Hilfszylindergehäuse 104 ist am Anschlußgehäuse 62 angeflanscht und bewegt sich daher mit diesem in Axialrichtung, wenn sich der Kolben 18 und damit die Kolbenstange 22 relativ zum axialfesten Zylinderkörper 10 bewegen. Die Zylinderräume 106 bzw. 108 werden über Anschlußstutzen 110 bzw. 112 wahlweise mit Druck beaufschlagt und verschieben den Kolben 114 entsprechend, dessen Kolbenstange 116 ein mechanisch auf die Hülse wirkendes Steuerglied in Form einer Laufrolle 118 trägt. Damit die Rolle 118 nach dem Umschalten nicht reibend an der Hülse 74 anliegt, sitzen beidseits des Kolbens 114 relativ dicke Ringe 120 aus elastischem Material, die nach Abschlaten der Druckimpulse den Kolben wieder etwas in Richtung seiner Mittelposition zurückdrücken und damit die Laufrolle 118 von der Steuerkante 122 bzw. 124 der Hülse 74 abheben. Anstelle der Ringe 120 können auch metallische Federn für denselben Zweck vorgesehen sein.

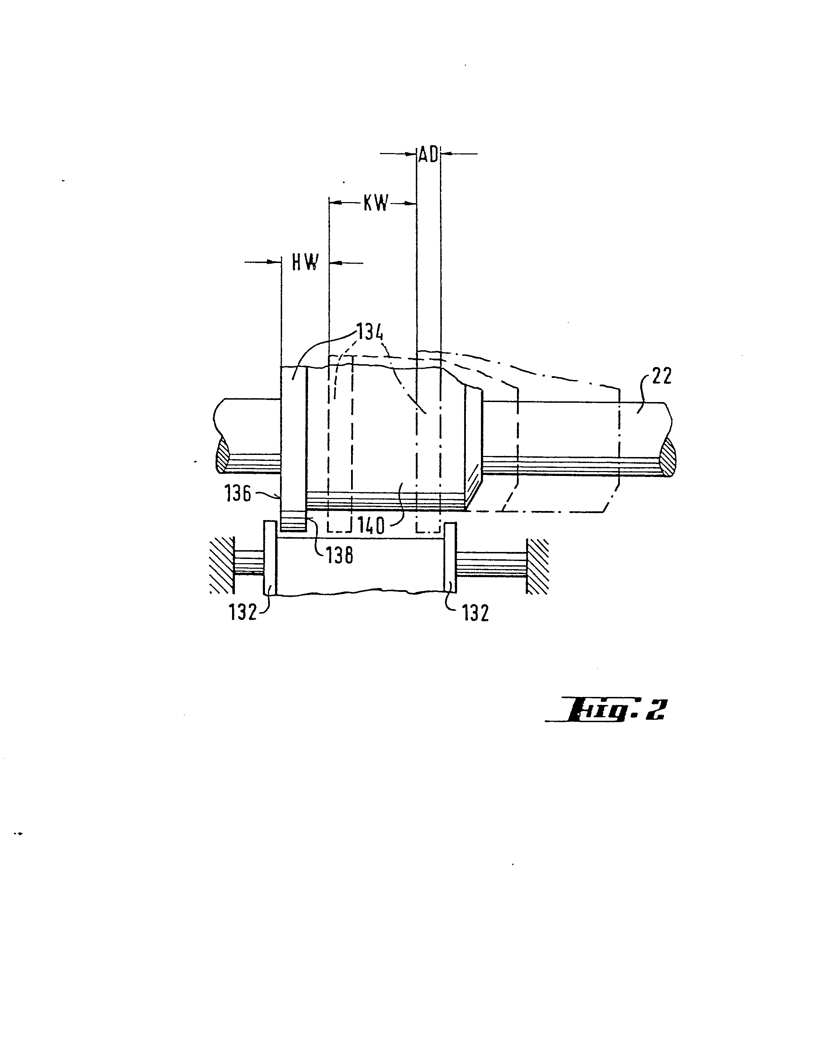

Der Hilfszylinder muß aber keineswegs unbedingt mit der Kolbenstange 22 die Axialbewegung ausführen, sondern kann auch ortsfest sein. Eine solche Ausführung ist in Fig. 2 angedeutet. Hier ist der Hilfskolben ortsfest, und der Hilfszylinder bewegt sich relativ zu ihm. Der Hilfszylinder trägt zwei Radialbunde 132, deren Abstand voneinander gleich ist der Summe von Kolbenspannweg KW, Hülsenschaltweg HW und Axialdicke AD des Bundes 134 zwischen den Steuerkanten 136, 138 und Hülse 140. Ausgehend von der Endposition entsprechend Fig. 1, sind die Umschaltposition der Hülse gestrichelt und die daraufhin eingenommene Endstellung der Hülse nach der Kolbenbewegung strichpunktiert angedeutet.

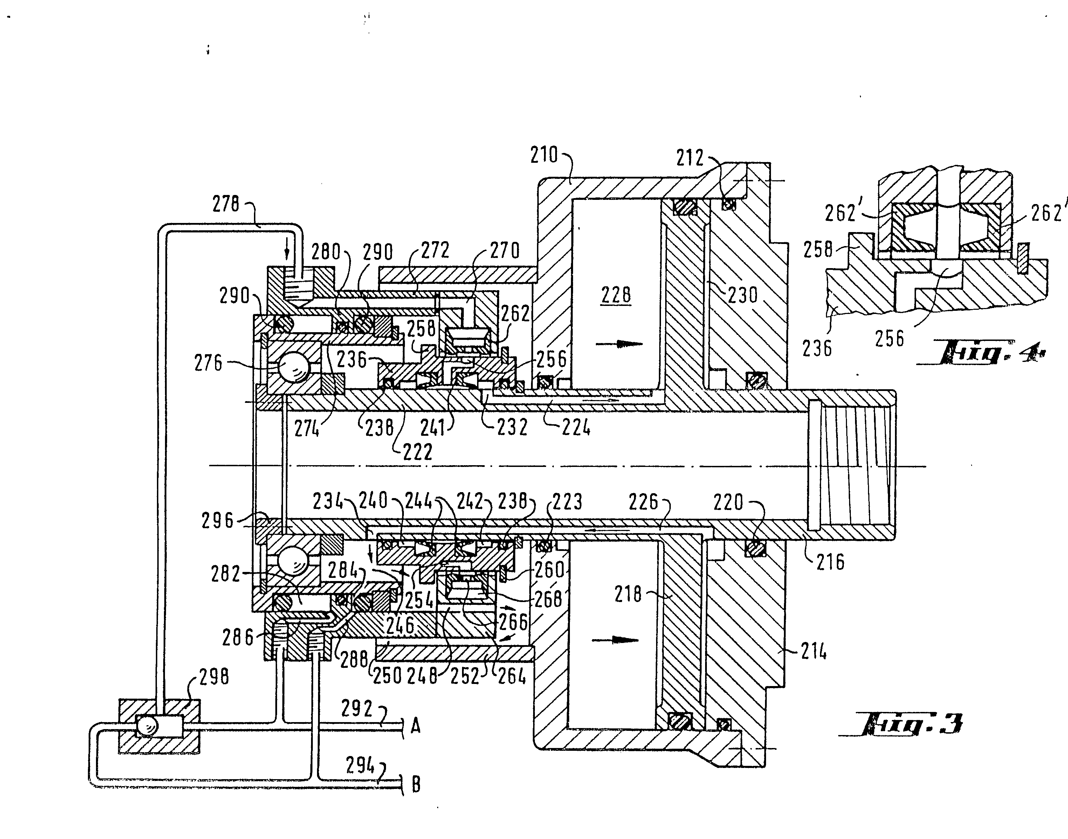

Die Ausführungsform nach Fig. 3 ist ein sogenannter Hohlspannzylinder, der beispielsweise bei der Verarbeitung von Stangenmaterial auf Drehmaschinen eingesetzt wird und axial einen entsprechenden Durchlaß von z.B. 60 mm Durchmesser freiläßt.

Der Zylinderkörper 210 ist in üblicher Weise an einer Maschinenspindel (nicht dargestellt), beispielsweise dem Spindelstock einer Drehmaschine, befestigt und dort durch einen bei 212 abgedichteten Deckel 214 verschlossen. Die hier natürlich hohle Kolbenstange 216 des Kolbens 218 durchsetzt den Deckel 214 und ist gegen diesen mittels O-Ring 220 abgedichtet geführt. Das jenseitige Teil 222 der Kolbenstange ist bei 223 gegen den Zylinderkörper 210 abgedichtet und weist eine erste axiale Bohrung 224 und vorzugsweise diametral gegenüber der ersten eine zweite axiale Bohrung 226 auf. Die Bohrungen 224 bzw. 226 münden radial in die Zylinderkammer 228 bzw. 230. Auch an ihrem dem Zylinder abgewandten Ende münden die Bohrungen 224 und 226 in Radialrichtung, doch sind diese Mündungen 232, 234 in Axialrichtung zueinander versetzt. Einspeisung von Druckmedium in die und Belüftung aus den Zylinderkammern 228, 230 erfolgen, wie im ersten Ausführungsbeispiel, unter Steuerung durch die als Ventilglied eines Vierwegeventils dienende axialverschiebliche Hülse 236, die gegen die Kolbenstange 222 mittels O-Ringen 238 abgedichtet ist. Der Ringraum innerhalb der Hülse umfaßt drei Kammern 240, 241 und 242, die voneinander durch Doppellippendichtungen 244 mit einander abgekehrten Lippen isoliert sind. Die Axialabmessungen sind so getroffen, daß in der einen Endstellung der Hülse - in der Zeichnung dargestellt - die Zylinderkammer 228 über Bohrung 224 und Kammer 241 mit Druck beaufschlagt wird und das Druckmedium durch die Lippendichtung 244 zwischen diesen beiden Kammern eingesperrt bleibt, so daß die Druckmediumzufuhr beendet werden kann. Die Zylinderkammer 230 wurde zugleich über Bohrung 226 in den Ringraum 246 belüftet; von dort kann das Druckmedium über eine achsparallele Bohrung 248 im noch zu beschreibenden Umschaltorgan und einen Ringspalt 250 zwischen diesem und einer am
Zylinderkörper 210 angebrachten Schürze 252 entweichen. Dieser
labyrinthartige Verlauf des Strömungspfades wirkt geräuschdämpfend. Im Falle von Druckluft gelangt diese dann einfach
ins Freie; im Falle von Hydraulikfluid muß es aufgefangen
werden und in einen Tank zurückgeführt werden, in den der
Saugstutzen einer Pumpe eintaucht.

In der anderen Endstellung der Hülse 236 wird, wie man ohne
weiteres der ZEichnung entnimmt, die Zylinderkammer 228 belüftet,
und die Zylinderkammer 230 unter Druck gesetzt, wofür wie zuvor
nur eineAnsteuerung mit Druckimpuls notwendig ist und die Druckhaltung durch die andere Lippendichtung 244 gewährleistet wird.

Die Einspeisung des Druckmediums in die Hülsenkammer 241
erfolgt über einen kurzen, im wesentlichen radial verlaufenden
Kanal 254, der hier dargestellte Z-förmige Verlauf dieses Kanals
ist nicht zwingend, dient aber der Platzersparnis in Axialrichtung. Der Kanal 254 mündet in eine Ringnut 256, die in
Axialrichtung etwa mittig zwischen einem Bund 258 der Hülse
und einem Sprengring 260 liegt. In Ausfluchtung mit der Ringnut 258 ist ein sogenannter K-Ring 262 in einem Stützring 264
angeordnet. Der K-Ring 262 aus elastischem Dichtungsmaterial besitzt U-förmigen Querschnitt und weist an der U-Basis mehrere
Durchtritte 266 auf. Ohne Druckmediumzuschaltung besteht kein
Kontakt zwischen dem K-Ring und der Hülse 236. Wird jedoch in
den Ringraum 269 der Stützrings 264 über Leitung 270 Druckmedium eingespeist, kontrahiert wegen der Differenz der druckbeaufschlaten Flächen der K-Ring in Radialrichtung, legt sich
abdichtend an die Hülse 236 an und ermöglicht den Durchtritt
von Druckmedium in die Ringnut 256 und damit in die Kammer 241:
anstelle des K-Rings kann man auch, wie in Fig. 4 gezeigt, eine
Anordnung mit zwei Lippenringdichtungen 262' mit einander zugekehrten Lippen vorsehen. Es versteht sich, daß die Druckimpulse
nur im Stillstand des Spannzylinders aufgeschaltet werden.

Der Stützring 264 erfüllt somit die Funktion des üblichen
Anschlußgehäuses, zugleich bildet er aber auch einen Bestandteil des Umschaltorgans. Er ist nämlich mit der Außenmuffe 272 einer Ringzylinder-/Ringkolben-Anordnung verbunden, deren Innenmuffe 274 mittels Kugellager 276 auf der Kolbenstange 222 abgestützt und gelagert ist. Es versteht sich, daß das gesamte Umschaltorgan nicht mit umläuft, jedoch relativ zur Kolbenstange 222 axialbeweglich ist und außerdem zusammen mit der Kolbenstange relativ zum Zylinderkörper 210 in Axialrichtung verfahrbar ist. Die nur als Leitung 278 angedeutete Druckmediumzufuhr zur Leitung 270 ist deshalb in an sich bekannter Weise als flexible Schlauchleitung ausgebildet.

An sich kann die Verschiebung des Teils mit der Leitung 270 in beliebiger Weise, z.B. mechanisch oder elektrisch, erfolgen. Es ist jedoch bevorzugt, diese Verschiebung ebenfalls durch Druckimpulse zu bewirken. Deshalb sind zwischen Innenmuffe 274 und Außenmuffe 272 zwei durch den Ringkolben 280 voneinander getrennte Steuerräume 282, 284 ausgebildet, die über die Zuleitungskanäle 286 bzw. 288 mit Druckmediumimpulsen beaufschlagbar sind. Die elastischen Anschlagringe 290 erfüllen dieselbe Funktion wie oben für die Ringe 120 beschrieben.

Das Druckmedium wird für den Spann- bzw. Entspannvorgang zwischen den Leitungen 292 bzw. 294 alternierend geschaltet und beaufschlagt über das Umschalt-Sperrventil 298 die Leitung 278 sowie, direkt, Zuleitung 286 oder 288. Es muß noch einmal betont werden, daß nur Druckimpulse aufgeschaltet werden und danach beide Leitungen 292 und 294 entlüftet werden, damit der K-Ring 262 bzw. die Lippendichtringe 262' von der Hülse 236 abheben.

Das Kugellager 276 wird auf der Kolbenstange 222 mittels eines angeschraubten Halterings 296 gesichert. Nach Lösen der Verschraubung kann das Kubellager zusammen mit der Ringkolben-/ Ringzylinderanordnung und der Hülse von der Kolbenstange 222 als Baueinheit abgezogen werden.

Patentansprüche

1. Umlaufender Spannzylinder für Werkzeugmaschinen mit einem relativ zum Spannzylinderkörper beweglichen Spannkolben, Druckmediumzuleitungen zu den Zylinderkammern beidseits des Kolbens, einem mit dem Zylinderkörper und dem Kolben umlaufenden Vierwegeventil mit wechselseitigem Beaufschlagen bzw. Entlüften der Zylinderkammern mit Druckmedium, das über ein nichtumlaufendes Anschlußelement zugeführt wird, und mit einer mitumlaufenden Sicherheits-Rückschlagventilanordnung, dadurch gekennzeichnet, daß das Vierwegeventil als Ventilglied eine auf der Außenseite der Kolbenstange axialverschiebliche Hülse umfaßt und daß ein nichtumlaufendes Umschaltorgan für deren Axialverschiebung vorgesehen ist.

2. Umlaufender Spannzylinder nach Anspruch 1 in Form eines Vollspannzylinders, dadurch gekennzeichnet, daß die Rückschlagventilanordnung in Strömungsrichtung vor dem Ventilglied angeordnet ist und daß die Kolbenstange (22) drei Axialbohrungen (24, 30, 36) aufweist, deren eine (36) über das Rückschlagventil (42) in eine Verteilerkammer (86) auf der Innenseite der Hülse (74) mündet, welche Kammer (86) in jeweils einer von zwei axialen Endstellungen über die zweite Axialbohrung (24) bzw. die dritte Axialbohrung (30) mit der einen oder der anderen Zylinderkammer kommuniziert.

3. Vollspannzylinder nach Anspruch 2, dadurch gekennzeichnet, daß das Rückschlagventil ein als O-Ring (42) ausgebildetes, in einer äußeren Umfangsnut der Kolbenstange (22) angeordnetes Ventilglied umfaßt.

4. Vollspannzylinder nach Anspruch 2 und 3, dadurch gekennzeichnet, daß die zweite und die dritte Axialbohrung über zugeordnete Radialbohrungen (50; 52), die beidseits des O-Rings (42) nach außen münden, mit der Verteilerkammer (86) bzw. mit der umgebenden Atmosphäre verbunden sind.

5. Umlaufender Spannzylinder nach Anspruch 1 in Form eines Hohlspannzylinders, dadurch gekennzeichnet, daß das Umschaltorgan zugleich das Anschlußelement bildet, von dem aus das Druckmedium dem Vierwegeventil nur im Stillstand des Zylinders zuführbar ist, während die axialverschiebliche Hülse gegen die Kolbenstange mittels als Rückschlagventile wirkender Dichtungen abgedichtet ist.

6. Hohlspannzylinder nach Anspruch 5, dadurch gekennzeichnet, daß das Umschaltorgan als die Kolbenstange umschließende Ringkolben-Ringzylinder-Anordnung für Druckmediumbetätigung ausgebildet ist.

7. Hohlspannzylinder nach Anspruch 6, dadurch gekennzeichnet, daß der axialbewegliche Ringkolben einen in eine Ringnut der axialbeweglichen Hülse greifenden Ringflansch aufweist, in welchem als Anschlußdichtung für die Druckmediumzufuhr eine K-Ringanordnung oder ein Lippendichtungspaar vorgesehen ist, welche(s) mit einem radialen Zufuhrkanal der Hülse in Kommunikationsverbindung bringbar ist.

8. Hohlspannzylinder nach Anspruch 6 oder 7, dadurch gekennzeichnet, daß das Umschaltorgan auf der Kolbenstange radial abgestützt ist.

9. Hohlspannzylinder nach Anspruch 8, dadurch gekennzeichnet daß zur Abstützung ein Kugellager vorgesehen ist, das nach Lös einer Befestigung gemeinsam mit dem Umschaltorgan und der als Vierwegeventilglied dienenden Hülse von der Kolbenstange axial abziehbar ist.

0011220

10.    Umlaufender Spannzylinder nach einem der vorangehenden Ansprüche mit einem druckmediumbetätigten Umschaltorgan, dadurch gekennzeichnet, daß das Umschaltorgan Rückstellelemente zum axialen Außereingriffbringen mit der Hülse nach vollzogener Umschaltung aufweist.

0011220

_Fig. 1_

Fig. 2

Fig: 4

Fig: 3

3/3

0011220

## EUROPÄISCHER RECHERCHENBERICHT

Europäisches Patentamt

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | US - A - 1 785 349 (G.F. HOPKINS) <br> * Seite 1, Zeile 65 bis Seite 2, Zeile 59 * <br> -- | 1 | B 23 B 31/30 |
| | US - A - 2 809 612 (G.A. HIGHBERG) <br> * Anspruch 1; Spalte 2, Zeile 41 bis Spalte 3, Zeile 9; Spalte 4, Zeile 19 bis Spalte 5, Zeile 16; Fig. 2 bis 5 * <br> -- | 1,10 | |
| D | DE - B2 - 2 334 940 (INDEX-WERKE KG) <br> * Ansprüche 1, 2; Spalte 3, Zeilen 2 bis 4; Fig. 1 * <br> -- | 1,5 | RECHERCHIERTE SACHGEBIETE (Int. Cl.3) <br><br> B 23 B 31/00 <br> F 16 L 27/08 |
| D | DE - B - 1 949 457 (P. FORKARDT KG) <br> * Spalte 4, Zeile 41 bis Spalte 5, Zeile 60; Spalte 6, Zeile 59 bis Spalte 7, Zeile 27 * <br> -- | 1,3 | |
| A | DE - B - 1 287 905 (P. FORKARDT KG) <br> * Fig. 1, 3 * <br> ---- | 4 | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort <br> Berlin | Abschlußdatum der Recherche <br> 22-02-1980 | Prüfer <br> MARTIN |
|---|---|---|

EPA form 1503.1 06.78